# EUROPEAN PATENT APPLICATION

(11) **EP 2 357 809 A1**
(43) Date of publication of application: **17.08.2011**
(21) Application number: 10193897.5
(22) Date of filing: 07.12.2010
(51) Int. Cl.: H04N 5/76, G11B 19/02, G11B 27/34

(54) **Multimedia device and method for shifting to desired replay point with control tool**

(30) Priority: 30.12.2009 KR 20090133744
(71) Applicant: iriver Limited, Seoul 137-060 (KR)
(72) Inventor: Choi, Woosik, 140-030 Seoul (KR)
(74) Representative: Gulde Hengelhaupt Ziebig & Schneider

(57) **Abstract**

Provided is a multimedia device for shifting to desired replay point with control tool. The multimedia device includes a multimedia control module, a display module, a touch sensing module, and a control tool control signal generation module. The multimedia control module controls replay of a multimedia file. The display module displays a control tool which performs control to shift a designated certain time unit from a current replay point when the multimedia file is currently being replayed and replay the multimedia file. The touch sensing module includes a touch sensing region for sensing a user touch signal and a moving direction of the user touch signal at a certain region where the control tool is displayed. The control tool control signal generation module generates a control tool control signal for controlling the control tool, and transmits the control signal to the multimedia control module. The multimedia control module receives the control tool control signal and replays the multimedia file at a shifted replay point which is shifted by a certain time unit from a current replay point in a predetermined direction according to the moving direction of the user touch signal.

## Description

### CROSS-REFERENCE TO RELATED APPLICATIONS

This application claims priority to Korean Patent Application No. 10-2009-0133744, filed on December 30, 2009, the disclosure of which is incorporated herein by reference in its entirety.

### TECHNICAL FIELD

The present invention relates to a multimedia device and method for shifting to desired replay point with control tool, and in particular, to a multimedia device and method for shifting to desired replay point with control tool, which shift in certain time units designated irrespective of the total replay time of a multimedia file, and thus can shift to a replay point desired by a user.

### BACKGROUND

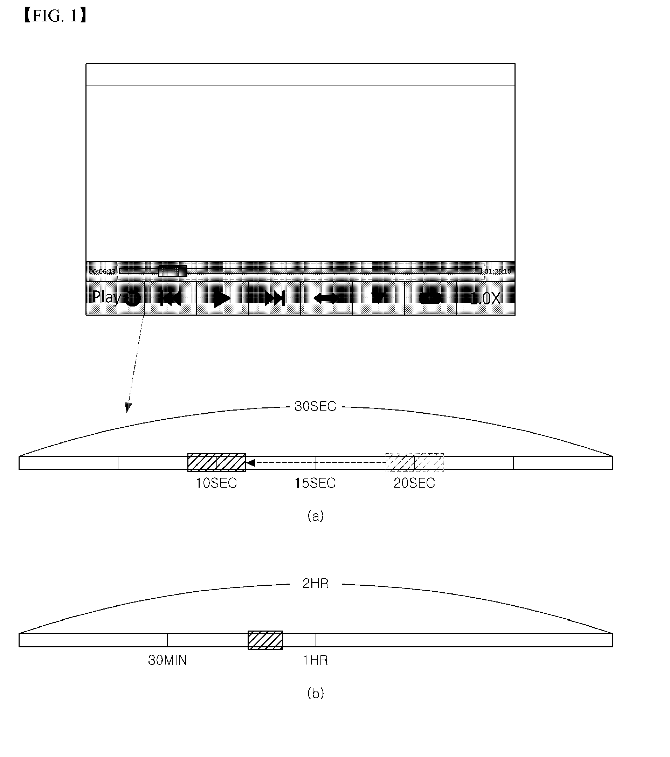

There is a progressive bar that displays a current replay point, being a point when a multimedia file is currently replayed, according to the size or total replay time of the multimedia file. The progressive bar is disposed at a certain region of a display screen, and when an input is given to a certain point of total replay time that is displayed by the progressive bar, a multimedia device may shift to the given point and replay the multimedia file. There may be a video file having a replay time of one minute and a video file having a replay time of one or more hours according to a file size, and thus a time to be displayed by the progressive bar varies with the replay time of the multimedia file. However, the progressive bar is always displayed in a length of about 5 to 10 cm in accordance with the display screen of the mobile device regardless of the replay time of the multimedia file. For example, as shown in FIG. 1, the length of a progressive bar that displays a video file having a replay time of 30 minutes is inevitably the same as the length of a progressive bar that displays a video file having a replay time of two hours.

As shown a portion (a) of FIG. 1, a multimedia file having a very short replay time of about 30 seconds may find a point desired by a user with a progressive bar. However, as shown in a portion (b) of FIG. 1, by the user's giving an input to a certain point of the progressive bar to move the progressive bar in a multimedia file having a replay time of two hours, it is impossible to shift to a point after/before ten seconds and replay the multimedia file. Accordingly, when replaying a multimedia file having a replay time that is not relatively short like that where a user listens to a lecture or watches a movie, it is impossible for the user to control a progressive bar in detail and shift to a desired point.

### SUMMARY

Accordingly, the present invention provides a multimedia device and method for shifting to desired replay point with control tool, which shift in certain time units designated irrespective of the total replay time of a multimedia file, thereby shifting to a replay point desired by a user.

According to an aspect, there is provided a multimedia device for shifting to desired replay point with control tool, which includes: a multimedia control module controlling replay of a multimedia file; a display module displaying a control tool which performs control to shift a designated certain time unit from a current replay point when the multimedia file is currently being replayed and replay the multimedia file; a touch sensing module including a touch sensing region for sensing a user touch signal and a moving direction of the user touch signal at a certain region where the control tool is displayed; and a control tool control signal generation module generating a control tool control signal for controlling the control tool, and transmitting the control signal to the multimedia control module, wherein the multimedia control module receives the control tool control signal and replays the multimedia file at a shifted replay point which is shifted by a certain time unit from a current replay point in a predetermined direction according to the moving direction of the user touch signal.

The multimedia device may further include: a progressive bar control module controlling a progressive bar to display the current replay point in proportion to total replay time of the multimedia file, wherein the progressive bar control module links and provides the progressive bar according to the control tool control signal which is inputted to be replayed at the shifted replay point.

When the moving direction is a forward direction, the control tool control signal generation module may generate the control tool control signal which allows the multimedia file to be replayed at the shifted replay point which is forward shifted by the certain time unit, and when the moving direction is a rearward direction, the control tool control signal generation module may generate the control tool control signal which allows the multimedia file to be replayed at the shifted replay point which is rearward shifted by the certain time unit.

When the control tool has a circular shape and a wheel mode, the forward direction may be a clockwise direction, and the rearward direction may be a counterclockwise direction.

In the wheel mode, the touch sensing region may include at least one or more periodic points disposed at a circumference region, and arranged in the circumference which is equally divided at certain angles, and the control tool control signal generation module may sense that the periodic points are touched according to the user touch signal and generate the control tool control signal for shifting a certain time unit in proportion to the periodic point touched.

When the control tool has a linear shape and a flick mode, the forward direction may be a moving direction of the progressive bar, and the rearward direction may be a direction opposite to the moving direction of the progressive bar.

In the flick mode, the touch sensing region may include at least one or more periodic points disposed at a line region, and arranged in the line which is equally divided at certain lengths, and the control tool control signal generation module may sense that the periodic points are touched according to the user touch signal and generate the control tool control signal for shifting a certain time unit in proportion to the periodic point touched.

The control tool control signal generation module may further set multiplication of the certain time unit to generate the control tool control signal.

The control tool control signal generation module may further sense an acceleration of the user touch signal, and set the multiplication of the certain time unit according to the acceleration.

According to another aspect, there is provided a control method of multimedia device for replaying multimedia files, which includes: displaying and providing, by the multimedia device, a control tool which performs control to shift a designated certain time unit from a current replay point when the multimedia file is currently being replayed and replay the multimedia file, at a display region of the multimedia device; sensing, by the multimedia device, a user touch signal inputted to the control tool and a moving direction of the user touch signal; and shifting, by the multimedia device, a designated certain time unit from the current replay point when the multimedia file is currently being replayed and replaying the multimedia file, in a predetermined direction according to the moving direction of the user touch signal.

The control method may further include: controlling a progressive bar to display the current replay point when the multimedia file is currently being replayed in proportion to a total replay time of the multimedia file, before the providing of a control tool; and linking the progressive bar to shift the certain time unit according to the shifting and replaying of the multimedia file, after the shifting and replaying of the multimedia file.

When the sensing of a user touch signal senses a moving direction of the user touch signal as a forward direction, the shifting and replaying of the multimedia file may replay the multimedia file at a shifted replay point which is forward shifted by the certain time unit, and when the sensing of a user touch signal senses the moving direction of the user touch signal as a rearward direction, the shifting and replaying of the multimedia file may replay the multimedia file at a shifted replay point which is rearward shifted by the certain time unit.

The providing of a control tool may provide the control tool which has a circular shape and a wheel mode. In the wheel mode, the sensing of a user touch signal may sense the user touch signal at a circumference region which is formed along the circular shape, the forward direction may be a clockwise direction, and the rearward direction may be a counterclockwise direction.

The providing of a control tool may provide the control tool which has a linear shape and a flick mode. In the flick mode, the sensing of a user touch signal may sense the user touch signal at a line region which is formed along the linear shape, the forward direction may be a moving direction of the progressive bar, and the rearward direction may be a direction opposite to the moving direction of the progressive bar.

In the shifting and replaying of the multimedia file, the multimedia device may further set multiplication of the certain time unit, and shift the certain time unit to replay the multimedia file according to the multiplication.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

FIG. 1 is an exemplary diagram illustrating a progressive bar of a related art multimedia device.

FIG. 2 is a block diagram illustrating a configuration of a multimedia device for shifting to desired replay point with control tool according to an embodiment of the present invention.

FIG. 3 is a diagram for describing a current replay point and a shifted replay point in a multimedia device according to an embodiment of the present invention.

FIG. 4 is an exemplary diagram illustrating a wheel-mode multimedia device for shifting to desired replay point with control tool according to an embodiment of the present invention.

FIG. 5 is an exemplary diagram illustrating a wheel-mode multimedia device for shifting to desired replay point with control tool according to an embodiment of the present invention.

FIG. 6 is an exemplary diagram illustrating a flick-mode multimedia device for shifting to desired replay point with control tool according to an embodiment of the present invention.

FIG. 7 is a flowchart illustrating a control method of multimedia device with control tool according to an embodiment of the present invention.

### DETAILED DESCRIPTION OF EMBODIMENTS

Hereinafter, the present invention will be described in detail with reference to the accompanying drawings. Throughout the drawings and the detailed description, unless otherwise described, the same drawing reference numerals will be understood to refer to the same elements, features, and structures. The relative size and depiction of these elements may be exaggerated for clarity, illustration, and convenience. The following detailed description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. Also, descriptions of well-known functions and constructions may be omitted for increased clarity and conciseness.

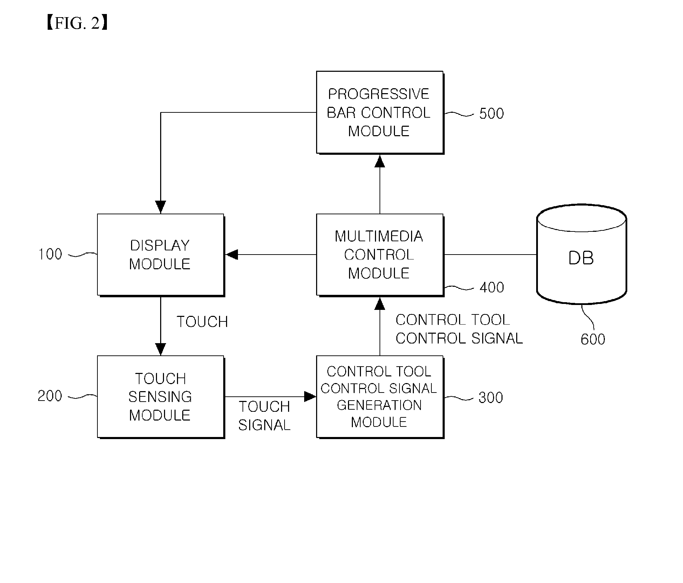

FIG. 2 is a block diagram illustrating a configuration of a multimedia device for shifting to desired replay point with control tool according to an embodiment of the present invention. The multimedia device is one that may replay multimedia files such as audio files or video files.

Referring to FIG. 2, a multimedia device according to an embodiment of the present invention includes a display module 100, a touch sensing module 200, a control tool control signal generation module 300, and a multimedia control module 400.

The multimedia control module 400 controls the replaying of multimedia files that are stored in the database 600 of the multimedia device. When the multimedia file is an audio file, the multimedia control module 400 performs control to replay music. When the multimedia file is a video file, the multimedia control module 400 controls the replaying of a video.

The display module 100 displays a control tool. The control tool may perform control to shift a designated certain time unit from a current replay point when a multimedia file is currently being replayed and replay the multimedia file. For example, the control tool may be a touch recognition jog shuttle. The display module 100 may output an audio file or a video file according to the control of the multimedia control module 400.

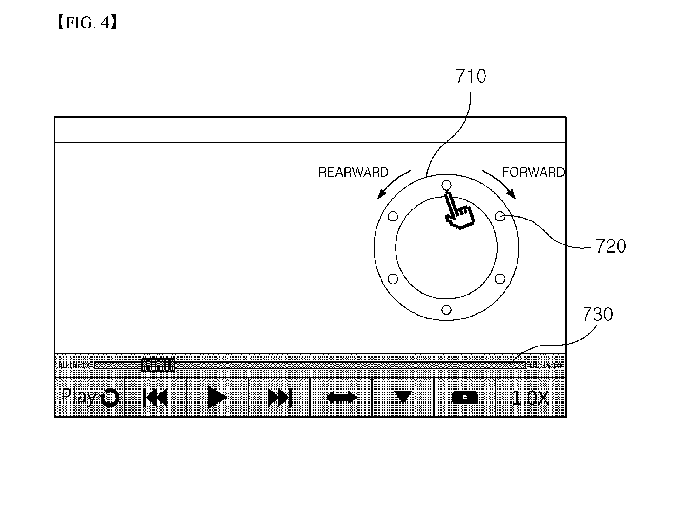

The touch sensing module 200 senses a user touch signal that is inputted to a touch sensing region. The touch sensing region 710, as illustrated in FIG. 4, is formed at a certain region where the control tool is displayed, and senses a user touch signal inputted from a user and the moving direction of the user touch signal.

The control tool control signal generation module 300 generates a control tool control signal for controlling the control tool and transmits the control signal to the multimedia control module 400. The control tool control signal is a command that allows a current-replayed multimedia file to be shifted in certain time units and be replayed according to the user touch signal.

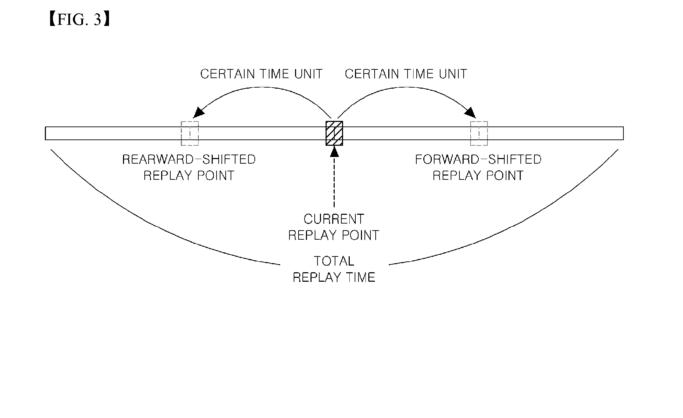

To provide a description with reference to FIG. 3, there is a progressive bar based on the size or total replay time of the multimedia file. The progressive bar displays a current replay point when a multimedia file is currently being replayed. When the user touch signal is inputted from the user, the multimedia file is replayed from a shifted replay point which is a replay point after it shifts by a certain time unit from a current replay point.

The control tool control signal generated by the control tool control signal generation module 300 is transmitted to the multimedia control module 400. The multimedia control module 400 receives the control tool control signal and replays the multimedia file at a shifted replay point that has been shifted by a certain time unit from a current replay point in a predetermined direction according to the moving direction of the user touch signal. When the moving direction of the user touch signal is a forward direction, the control tool control signal generation module 300 generates the control tool control signal that allows the multimedia file to be replayed at a shifted replay point that has been shifted forward by a certain time unit. When the moving direction of the user touch signal is a rearward direction, the control tool control signal generation module 300 generates the control tool control signal that allows the multimedia file to be replayed at a shifted replay point that has been shifted rearward by a certain time unit.

The multimedia device according to an embodiment of the present invention may further include a progressive bar control module 500.

The progressive bar control module 500 controls a progressive bar that displays a current replay point of total replay time. As shown in FIG. 4, a progressive bar 730 may display a current replay point in proportion to the total replay time of a multimedia file. Although a user cannot accurately shift to a desired replay point by using only the progressive bar 730, the progressive bar 730 may be useful when intending to check a degree of replay in an entire file or shift to a point after ten minutes in a multimedia file having a replay time of one hour.

According to an embodiment of the present invention, in this case, the progressive bar control module 500 links and provides the progressive bar 730 according to the control tool control signal. That is, when the user inputs a command that allows a shifted replay point after ten minutes to be used as a replay point with the control tool, the progressive bar control module 500 allows the progressive bar 730 to shift to a replay point after ten minutes from a current replay point and be displayed by linking the progressive bar 730 with the input.

Hereinafter, an operation of the multimedia device for shifting to desired replay point with control tool will be described with reference to FIGS. 4 to 6.

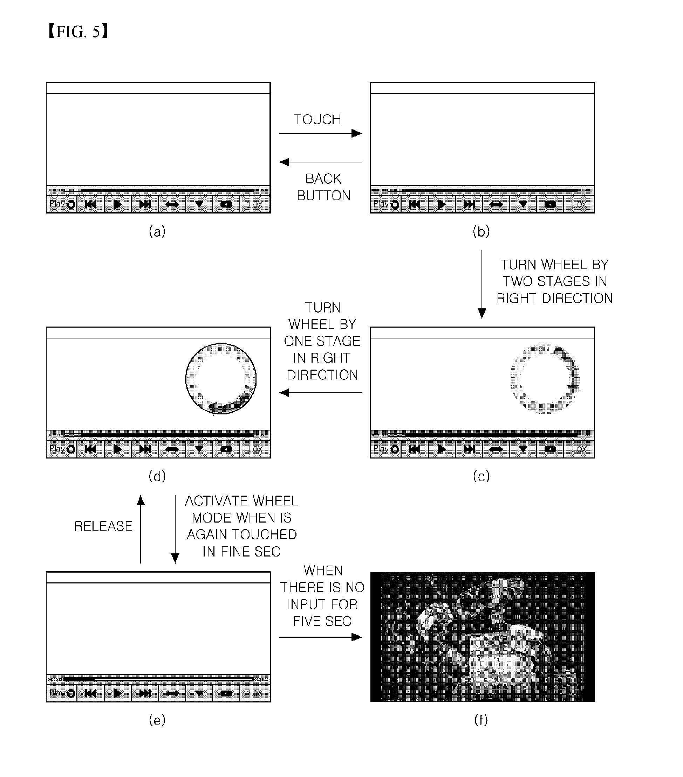

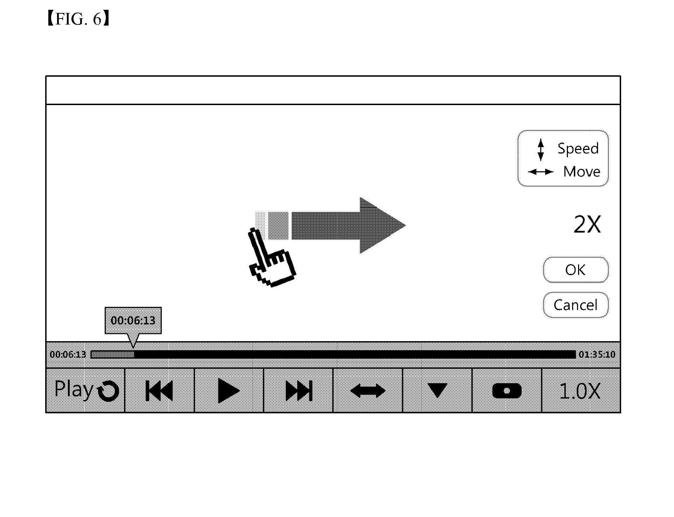

The control tool, for example, may have a circular shape or a linear shape. As shown in FIGS. 4 and 5, when the control tool has a circular shape, it has a wheel mode. As shown in FIG. 6, when the control tool has a linear shape, it has a flick mode.

In the wheel mode, the touch sensing region 710 receiving a user touch signal is disposed at a circumference region. The touch sensing region 710 may include at least one or more periodic points 720 that are arranged in the circumference that is equally divided at certain angles. For example, six periodic points are arranged in the circumference, and a certain time unit may be set to three seconds for an interval from one periodic point to another periodic point adjacent to it. The touch sensing module 200 senses that the periodic point is sensed through user touch. The control tool control signal generation module 300 generates the control tool control signal for shifting a certain time unit in proportion to a touched periodic point.

In the wheel mode, a clockwise direction may be set as a forward direction, and a counterclockwise direction may be set as a rearward direction. In the forward direction, a multimedia file is replayed at a shifted replay point that is forward shifted by a certain time unit. In the rearward direction, the control tool control signal generation module 300 replays the multimedia file at a shifted replay point that is rearward shifted by a certain time unit.

In the flick mode, a touch sensing region receiving a user touch signal is disposed at a region peripheral to a line. The touch sensing region may include at least one or more periodic points that are arranged in the line that is equally divided at certain lengths. For example, two periodic points are set in the line, and a certain time unit may be set to three seconds for an interval from one periodic point to another periodic point adjacent to it. In the flick mode, a desired replay point may be controlled in detail through touch that is shifted right and left in the control tool. In the flick mode, the same direction as the moving direction of the progressive bar may be set as a forward direction, and the direction opposite to the moving direction of the progressive bar may be set as a rearward direction. In the forward direction, a multimedia file is replayed at a shifted replay point that is forward shifted by a certain time unit. In the rearward direction, the control tool control signal generation module 300 replays the multimedia file at a shifted replay point that is rearward shifted by a certain time unit.

According to another embodiment of the present invention, the control tool control signal generation module 300 may further set the multiplication of a certain time unit. That, when a signal is inputted which is moved from one periodic point to another periodic point adjacent to it by the user touch signal, a certain time unit that is forward/rearward shifted may be set to three seconds. The multiplication of a certain time unit is set as two times multiplication, when a signal is inputted which is moved from one periodic point to another periodic point adjacent to it, a certain time unit that is forward/rearward shifted may be set to three seconds. Multiplication settings may be made by further sensing the acceleration of the user touch signal.

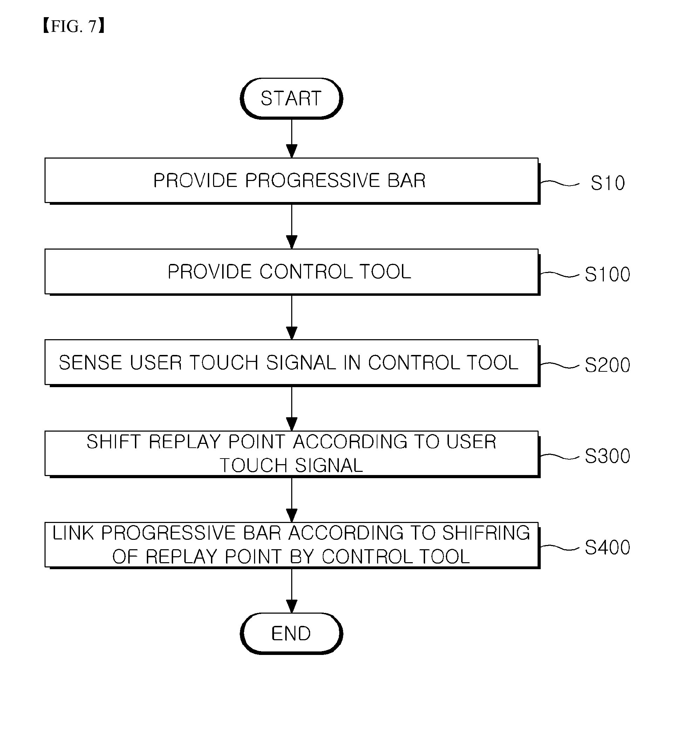

FIG. 7 illustrates a control method of multimedia device with control tool according to an embodiment of the present invention.

First, the multimedia device performs a control tool providing operation that displays a control tool at its display region to provide the control tool it in operation S100. The control tool may perform control to shift a designated certain time unit from a current replay point when a multimedia file is currently being replayed and replay a multimedia file. For example, the control tool may be a touch recognition jog shuttle.

In the control tool providing operation S100, the multimedia device may provide the control tool in a circular shape. When the control tool has the circular shape, it is activated to a wheel mode. In the wheel mode, the multimedia device senses a user touch signal in a circumference region that is formed along the circular shape and the moving direction of the user touch signal. In the wheel mode, a clockwise direction may be set as a forward direction, and a counterclockwise direction may be set as a rearward direction. In the forward direction, the multimedia device replays a multimedia file at a shifted replay point that is forward shifted by a certain time unit. In the rearward direction, the multimedia device replays the multimedia file at a shifted replay point that is rearward shifted by a certain time unit.

In the control tool providing operation S100, moreover, the multimedia device may provide the control tool in a linear shape. When the control tool has the linear shape, it is activated to a flick mode. In the flick mode, the multimedia device senses a user touch signal in a line region that is formed along the linear shape and the moving direction of the user touch signal. In the flick mode, the same direction as the moving direction of the progressive bar may be set as a forward direction, and the direction opposite to the moving direction of the progressive bar may be set as a rearward direction. In the forward direction, the multimedia device replays the multimedia file at a shifted replay point that is forward shifted by a certain time unit. In the rearward direction, the multimedia device replays the multimedia file at a shifted replay point that is rearward shifted by a certain time unit.

Subsequently, the multimedia device performs a touch signal sensing operation that senses a user touch signal inputted to the control tool and the moving direction of the user touch signal in operation S200. In the touch signal sensing operation S200, the multimedia device senses the user touch signal that is inputted from the user through the control tool formed at a certain region which is displayed and the moving direction of the user touch signal.

Afterward, the multimedia device performs a shift replay operation that shifts a designated certain time unit from a current replay point when the multimedia file is currently being replayed and replay the multimedia file, in a direction that has been predetermined according to the moving direction of the user touch signal. That is, when the moving direction of the user touch signal is sensed as a forward direction in the touch signal sensing operation S200, the multimedia device replays the multimedia file at a shifted replay point that is forward shifted by a certain time unit in the shift replay operation S300. On the other hand, when the moving direction of the user touch signal is sensed as a rearward direction in the touch signal sensing operation S200, the multimedia device replays the multimedia file at a shifted replay point that is rearward shifted by a certain time unit in the shift replay operation S300.

In the shift replay operation S300, the multimedia device further sets the multiplication of a certain time unit, and shifts a certain time unit according the multiplication to replay the multimedia file.

The multimedia device control method according to another embodiment of the present invention may further include a progressive bar controlling operation S10 that controls a progressive bar before performing the control tool providing operation S100. The multimedia device displays a current replay point when the multimedia file is currently displayed in proportion to the total replay time of the multimedia file. When the user touch signal is inputted from the user, the multimedia file is replayed from a shifted replay point being a replay point after shifting a certain time unit from a current replay point. At this point, the multimedia device may further perform a progressive bar linking operation S400 that links the progressive bar so as to shift a certain time unit according to the shift replay operation after the shift replay operation S300.

The multimedia device and method for shifting to desired replay point with control tool according to embodiments of the present invention shift in certain time units designated irrespective of the total replay time of a multimedia file, thereby shifting to a replay point desired by a user.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

## Claims

1. A multimedia device for shifting to desired replay point with control tool, the multimedia device comprising:
a multimedia control module controlling replay of a multimedia file;
a display module displaying a control tool which performs control to shift a designated certain time unit from a current replay point when the multimedia file is currently being replayed and replay the multimedia file;
a touch sensing module comprising a touch sensing region for sensing a user touch signal and a moving direction of the user touch signal at a certain region where the control tool is displayed; and
a control tool control signal generation module generating a control tool control signal for controlling the control tool, and transmitting the control signal to the multimedia control module,
wherein the multimedia control module receives the control tool control signal and replays the multimedia file at a shifted replay point which is shifted by a certain time unit from a current replay point in a predetermined direction according to the moving direction of the user touch signal.

2. The multimedia device of claim 1, further comprising: a progressive bar control module controlling a progressive bar to display the current replay point in proportion to total replay time of the multimedia file,
wherein the progressive bar control module links and provides the progressive bar according to the control tool control signal which is inputted to be replayed at the shifted replay point.

3. The multimedia device of claim 2, wherein:
when the moving direction is a forward direction, the control tool control signal generation module generates the control tool control signal which allows the multimedia file to be replayed at the shifted replay point which is forward shifted by the certain time unit, and
when the moving direction is a rearward direction, the control tool control signal generation module generates the control tool control signal which allows the multimedia file to be replayed at the shifted replay point which is rearward shifted by the certain time unit.

4. The multimedia device of claim 3, wherein when the control tool has a circular shape and a wheel mode, the forward direction is a clockwise direction, and the rearward direction is a counterclockwise direction.

5. The multimedia device of claim 4, wherein in the wheel mode,
the touch sensing region comprises at least one or more periodic points disposed at a circumference region, and arranged in the circumference which is equally divided at certain angles, and
the control tool control signal generation module senses that the periodic points are touched according to the user touch signal, and generates the control tool control signal for shifting a certain time unit in proportion to the periodic point touched.

6. The multimedia device of claim 3, wherein when the control tool has a linear shape and a flick mode, the forward direction is a moving direction of the progressive bar, and the rearward direction is a direction opposite to the moving direction of the progressive bar.

7. The multimedia device of claim 6, wherein in the flick mode,
the touch sensing region comprises at least one or more periodic points disposed at a line region, and arranged in the line which is equally divided at certain lengths, and
the control tool control signal generation module senses that the periodic points are touched according to the user touch signal, and generates the control tool control signal for shifting a certain time unit in proportion to the periodic point touched.

8. The multimedia device of claim 3, wherein the control tool control signal generation module further sets multiplication of the certain time unit to generate the control tool control signal.

9. The multimedia device of claim 8, wherein the control tool control signal generation module further senses an acceleration of the user touch signal, and sets the multiplication of the certain time unit according to the acceleration.

10. A control method of multimedia device for replaying multimedia files, the control method comprising:
displaying and providing, by the multimedia device, a control tool which performs control to shift a designated certain time unit from a current replay point when the multimedia file is currently being replayed and replay the multimedia file, at a display region of the multimedia device;
sensing, by the multimedia device, a user touch signal inputted to the control tool and a moving direction of the user touch signal; and
shifting, by the multimedia device, a designated certain time unit from the current replay point when the multimedia file is currently being replayed and replaying the multimedia file, in a predetermined direction according to the moving direction of the user touch signal.

11. The control method of claim 10, further comprising:
controlling a progressive bar to display the current replay point when the multimedia file is currently being replayed in proportion to a total replay time of the multimedia file, before the providing of a control tool; and
linking the progressive bar to shift the certain time unit according to the shifting and replaying of the multimedia file, after the shifting and replaying of the multimedia file.

12. The control method of claim 11, wherein:
when the sensing of a user touch signal senses a moving direction of the user touch signal as a forward direction, the shifting and replaying of the multimedia file replays the multimedia file at a shifted replay point which is forward shifted by the certain time unit, and
when the sensing of a user touch signal senses the moving direction of the user touch signal as a rearward direction, the shifting and replaying of the multimedia file replays the multimedia file at a shifted replay point which is rearward shifted by the certain time unit.

13. The control method of claim 12, wherein:
the providing of a control tool provides the control tool which has a circular shape and a wheel mode, and
in the wheel mode, the sensing of a user touch signal senses the user touch signal at a circumference region which is formed along the circular shape, the forward direction is a clockwise direction, and the rearward direction is a counterclockwise direction.

14. The control method of claim 12, wherein:
the providing of a control tool provides the control tool which has a linear shape and a flick mode, and
in the flick mode, the sensing of a user touch signal senses the user touch signal at a line region which is formed along the linear shape, the forward direction is a moving direction of the progressive bar, and the rearward direction is a direction opposite to the moving direction of the progressive bar.

15. The control method of claim 12, wherein in the shifting and replaying of the multimedia file,
the multimedia device further sets multiplication of the certain time unit, and shifts the certain time unit to replay the multimedia file according to the multiplication.
